(19) Europäisches Patentamt
European Patent Office
Office européen des brevets

(11) **EP 3 483 513 B1**

(12) **EUROPÄISCHE PATENTSCHRIFT**

(45) Veröffentlichungstag und Bekanntmachung des Hinweises auf die Patenterteilung:
**18.08.2021 Patentblatt 2021/33**

(51) Int Cl.:
***F24D 19/10*** *(2006.01)* ***G05D 23/19*** *(2006.01)*

(21) Anmeldenummer: **18199318.9**

(22) Anmeldetag: **09.10.2018**

(54) **VERFAHREN ZUM BETREIBEN EINER HEIZUNGSANLAGE UND HEIZUNGSANLAGE**

METHOD FOR OPERATING A HEATING ASSEMBLY AND HEATING ASSEMBLY

PROCÉDÉ DE FONCTIONNEMENT D'UNE INSTALLATION DE CHAUFFAGE ET INSTALLATION DE CHAUFFAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.11.2017 DE 102017220097**

(43) Veröffentlichungstag der Anmeldung:
**15.05.2019 Patentblatt 2019/20**

(73) Patentinhaber: **Viessmann Climate Solutions SE 35108 Allendorf (DE)**

(72) Erfinder:
• **Marx, Lynn**
 **10435 Berlin (DE)**
• **Metzger, Jan**
 **35099 Burgwald (DE)**
• **Faßnacht, Tillman**
 **72663 Großbettlingen (DE)**
• **Stumpf, Bianca**
 **34613 Schwalmstadt (DE)**

(74) Vertreter: **MERH-IP Matias Erny Reichl Hoffmann Patentanwälte PartG mbB Paul-Heyse-Strasse 29 80336 München (DE)**

(56) Entgegenhaltungen:
EP-A1- 2 369 244    CN-A- 105 805 822
DE-A1- 4 241 858    DE-A1-102010 056 301
GB-A- 2 278 207    US-A1- 2016 283 844

**Beschreibung**

Die vorliegende Erfindung betrifft ein Verfahren zum Betreiben einer Heizungsanlage in einem Gebäude. Insbesondere soll durch das Verfahren ein Zeitpunkt bestimmt werden, zu dem ein Aufheizvorgang starten muss, um einen Raum bis zu einem vorgegebenen späteren Zeitpunkt auf einen bestimmten Sollwert aufzuheizen. Ferner betrifft die Erfindung eine Heizungsanlage.

In den meisten Heizungsanlagen, die heutzutage zum Heizen von Büro- oder Wohnräumen verwendet werden, können für feste Zeitpunkte Sollwerte der Raumtemperatur vorgegeben werden. Beispielsweise kann eine Heizungsanlage so konfiguriert sein, dass die Raumtemperatur über Nacht abgesenkt wird, bis am nächsten Morgen zu einer bestimmten Uhrzeit wieder ein höherer Sollwert erreicht werden soll. Um den Sollwert der Raumtemperatur pünktlich wie vorgegeben erreichen zu können, muss der Aufheizvorgang früh genug gestartet werden. Hierzu kann von der Heizungssteuerung die zum Aufheizen benötigte Zeit berechnet werden, die im Allgemeinen von einer Vielzahl von Parametern abhängig ist. Im Stand der Technik sind bereits einige solche Verfahren bekannt. Die zum Aufheizen eines Raumes auf eine vorgegebene Solltemperatur benötigte Zeit wird im Folgenden auch als Aufheizzeit bezeichnet.

Beispielsweise ist aus der internationalen Patentanmeldung WO 2013/058966 A1 ein gattungsgemäßes Verfahren zum Betreiben eines intelligenten Thermostats bekannt. Das Verfahren umfasst das Abspeichern eines gegenwärtigen Wertes für einen Umgebungsparameter. Wenn die gespeicherten Umgebungsparameterwerte zu einem lokalen Modell zum Ändern des Parameters mit der Zeit passen, wird eine verbleibende Reaktionszeit unter Verwendung eines lokalen Modells bestimmt. Die bestimmte Reaktionszeit wird gespeichert und die verbleibende Reaktionszeit wird in einer Anzeigevorrichtung angezeigt. Wenn die Umgebungsparameterwerte nicht zu einem lokalen Modell, aber zu einem globalen Modell passen, wird eine verbleibende Reaktionszeit unter Verwendung des globalen Modells bestimmt und die Reaktionszeit gespeichert und die verbleibende Reaktionszeit in der Anzeigevorrichtung angezeigt. Als Reaktionszeit kann zum Bespiel die verbleibende Zeit zum Aufheizen eines Raums auf einen Sollwert bestimmt werden.

Die US-Patentanmeldung US 2010/0318227 A1 offenbart gattungsgemäße Systeme und Verfahren zum Verringern einer Zykluszeit einer Klimaanlage. Zum Beispiel können eines oder mehrere der beispielhaften Systeme von einer Datenbank eine Zielzeit empfangen, zu der eine bestimmte Zieltemperatur erreicht werden soll. Zusätzlich erfasst das System die Temperatur innerhalb und außerhalb des Gebäudes. Es wird eine thermische Charakteristik des Gebäudes und ein Leistungsmerkmal der Klimaanlage verwendet, um die geeignete Zeit vor dem Zielzeitpunkt zu bestimmen, zu dem die Klimaanlage einschalten soll.

In der europäischen Patentanmeldung EP 2 369 244 A1 wird ein gattungsgemäßes Verfahren zum rechtzeitigen Erreichen von Temperatursollwerten durch einen Aufheizvorgang in einer Heizungsanlage eines Gebäudes beschrieben. Das Verfahren umfasst das Festlegen eines oder mehrerer Zielzeitpunkte, an denen die durch den Aufheizvorgang zu erreichenden Temperatursollwerte erreicht werden sollen. Ferner wird eine Zeitspanne, die zum Erreichen der Temperatursollwerte erforderlich ist, ermittelt, wobei hierzu die Leistung des Wärmeerzeugers und/oder die Umgebungsbedingungen herangezogen werden. Anschließend wird aus den festgelegten Zielzeitpunkten und der ermittelten Zeitspanne ein Startzeitpunkt des Aufheizvorganges bestimmt.

Die chinesische Patentanmeldung CN 105 805 822 A betrifft ein Verfahren zum Steuern einer Heizungsanlage, das ein neuronales Netzwerk verwendet. Ziel des Verfahrens ist es, ein Gebäude zu einem festgelegten Zeitraum auf eine festgelegte Raumtemperatur zu heizen.

Die DE 10 2010 056301 A1 offenbart ein Verfahren zum Simulieren einer tatsächlichen und einer nahen Zielraumtemperatur und eines zeitlichen Raums bis zu einer nahen Zielraumtemperatur für einen zu beheizenden Raum und das Bewerten und Studieren der relativen Heizperiode für den Raum. Die tatsächliche Raumtemperatur des Heizraums wird ermittelt. Ein bevorzugter Heizpunkt für den Heizraum wird berechnet. Die nahe Zielraumtemperatur wird zur bevorzugten Erhöhung der Vorlauftemperatur am Wärmeerzeuger auf die bevorzugte Raumtemperatur übertragen.

Zum Bestimmen der für einen Aufheizvorgang auf einen vorgegebenen Sollwert benötigten Zeit, werden bei den meisten Verfahren Modelle zum Simulieren des Aufheizverhaltens des Raumes verwendet, die eine Vielzahl von Eingangsparametern benötigen. Neben der ursprünglichen Raumtemperatur am Anfang des Aufheizvorgangs und dem vorgegebenen Sollwert der Raumtemperatur gehören hierzu meist auch eine Außentemperatur und eine Vorlauftemperatur im Heizkreis. Ferner können Parameter, die Eigenschaften des zu heizenden Raumes oder Gebäudes beschreiben, die in das Modell zum Berechnen der Aufheizzeit einfließen. Da diese die Eigenschaften des Raumes beschreibenden Parameter jedoch einerseits schwierig zu bestimmen sind und andererseits zeitlichen Schwankungen ausgesetzt sein können, kann es notwendig sein, das Modell immer wieder anzupassen und zu optimieren.

Die vorliegende Erfindung hat sich die Aufgabe gestellt, ein gegenüber dem Stand der Technik verbessertes Verfahren zum Betreiben einer Heizungsanlage und insbesondere zum Ermitteln der Aufheizzeit anzugeben. Die Lösung der erfindungsgemäßen Aufgabe gelingt durch ein Verfahren zum Betreiben einer Heizungsanlage gemäß dem Kennzeichen des Anspruchs 1. Erfindungsgemäß wird eine Vielzahl von Parametern in Abhängigkeit einer Vielzahl aufgezeichneter Messwerte ermittelt, wobei nur diejenigen Messwerte aus einem festgelegten Zeitraum verwendet werden, die während eines Heizvorgangs erzeugt wurden, wobei Messwerte eines Zeitpunkts dann zu einem Heizvorgang gehören, falls die aktuelle Raumisttemperatur kleiner als die aktuelle Raumsolltemperatur ist.

Das Verfahren kann insbesondere zum Betreiben einer Heizungsanlage mit Einzelraumregelung oder mit Referenzraumregelung verwendet werden. Bei einer Heizungsanlage mit Einzelraumregelung kann das Verfahren für jeden einzelnen einer Vielzahl von Räumen angewendet werden, so dass für jeden Raum eine Aufheizzeit bestimmt werden kann und die Vielzahl von Parametern jeweils von Eigenschaften des jeweiligen Raumes abhängig ist. Bei einer Heizungsanlage mit Referenzraumregelung wird das Verfahren nur auf den Referenzraum angewendet.

Der zweite Zeitpunkt, zu dem der Aufheizvorgang starten muss, um im ersten Zeitpunkt die vorgegebene Zieltemperatur zu erreichen, liegt zeitlich vor dem ersten Zeitpunkt. Die Zeitdauer vom zweiten Zeitpunkt bis zum ersten Zeitpunkt ergibt die Aufheizzeit. Zweck des Verfahrens ist das Ermitteln des zweiten Zeitpunkts, so dass eine Steuer- oder Regeleinrichtung der Heizungsanlage beziehungsweise ein Raumthermostat zu diesem Zeitpunkt das Aufheizen des Raums einleiten kann. Ziel der Erfindung ist es, das Ermitteln dieses zweiten Zeitpunkts zu optimieren, so dass der zweite Zeitpunkt mit einer höheren Genauigkeit ermittelt werden kann.

Das Ermitteln der Vielzahl von Parametern erfolgt in Abhängigkeit einer Vielzahl aufgezeichneter Messwerte aus einem festgelegten Zeitraum. Die periodisch zu vorgegebenen Zeitpunkten aufgezeichneten Messwerte, liegen insbesondere als Zeitreihe vor. Durch das Festlegen des Zeitraums kann eine Vielzahl historischer Messwerte für die Auswertung, also für das Ermitteln der Vielzahl von Parametern, ausgewählt werden. Der Zeitraum muss hierbei nicht zusammenhängend sein. Es kann eine Vielzahl historischer Messwerte ausgewertet werden, um die Vielzahl von Parametern zu ermitteln. Durch das Auswerten der historischen Messwerte können, zum Beispiel unter Verwendung eines Modells, das unter anderem Wärmeverluste aus dem betreffenden Raum und Fremdwärmeeintrag in den Raum berücksichtigen kann, Eigenschaften des Raumes abgeleitet werden, die einen Einfluss auf die Aufheizzeit haben. Beispielsweise kann das Aufheizverhalten des Raumes durch eine statistische Auswertung historischer Messwerte und einen Vergleich mit einem Modell analysiert werden. Hierzu sollen aber nur solche Messwerte verwendet werden, die bei Aufheizvorgängen erzeugt wurden. Ein Kriterium zum Erkennen eines Aufheizvorgangs ist insbesondere, dass die Raumisttemperatur kleiner als die aktuelle Raumsolltemperatur ist. Zum Erkennen der Heizvorgänge kann es ausreichend sein, die Messwerte der Raumisttemperatur und der Raumsolltemperatur auszuwerten.

Vorzugsweise werden die Messwerte als Zeitreihe zentral von einer Regel- oder Steuereinrichtung der Heizungsanlage aufgezeichnet. Hierzu kann die Heizungsanlage geeignete Mittel zum Erfassen der Raumisttemperatur, der Raumsolltemperatur, der Vorlauftemperatur und der Außentemperatur umfassen, die mit der Regel- oder Steuereinrichtung verbunden sein können. Insbesondere ist in dem mindestens einen beheizbaren Raum ein Raumtemperatursensor angeordnet. Ferner kann ein Außentemperatursensor an einem geeigneten Ort außerhalb des Gebäudes angeordnet sein. Alternativ kann die Außentemperatur von einer Wetterstation oder aus dem Internet empfangen werden. Zum Erfassen der Vorlauftemperatur kann ein Vorlauftemperatursensor im Vorlauf angeordnet sein.

Die Heizungsanlage kann eine Schnittstelle zum Kommunizieren mit einer Recheneinrichtung aufweisen. Die Recheneinrichtung kann beispielsweise ein geographisch entfernter Rechner sein. Der geographisch entfernte Rechner kann beispielsweise ein Server, ein Rechnernetzwerk beziehungsweise Rechnerwolke ("Cloud") sein. Hierzu kann insbesondere auch ein entsprechender Cloud-Computing-Dienstleister genutzt werden. Im Folgenden wird für die verschiedenen Alternativen zusammenfassend der Begriff "Server" verwendet. Die Heizungsanlage beziehungsweise eine Regel- oder Steuereinrichtung der Heizungsanlage kann die aufgezeichneten Messwerte an den Server übertragen, so dass der Schritt des Ermittelns der Vielzahl von Parametern vom Server ausgeführt wird. Der Begriff "geographisch entfernt" bedeutet, dass der Ort des Servers unabhängig vom Ort der Heizungsanlage ist. Zur Kommunikation mit dem Server kann eine geeignete Kommunikationsleitung, wie zum Beispiel ein Internetanschluss, mit dem die Heizungsanlage zum Beispiel über ein Gateway verbunden sein kann, verwendet werden.

Beim Auswählen von Heizvorgängen können weitere Kriterien berücksichtigt werden. Beispielsweise kann eine Bedingung für einen Heizvorgang sein, dass der Heizvorgang länger als ein erster vorgegebener Zeitraum ist. Der erste vorgegebene Zeitraum kann insbesondere einige Minuten, beispielsweise fünf bis zehn oder fünfzehn Minuten betragen. Hierdurch kann sichergestellt werden, dass nur solche Messwerte ausgewählt werden, die tatsächlich zu einem Heizvorgang und nicht zu einer zufälligen zeitlichen Temperaturschwankung gehören. Außerdem ist eine bestimmte Mindestdauer vorteilhaft, da dann eine für eine statistische Auswertung ausreichend große Zahl von Messwerten vorliegt.

Ferner kann als ein Kriterium zum Auswählen eines Heizvorgangs vorgegeben werden, dass beim Beginn des Heizvorgangs die Differenz zwischen aktueller Raumsolltemperatur und aktueller Raumisttemperatur größer als ein Schwellenwert ist, der beispielsweise mindestens 0,5 K beträgt. Es werden also nur solche Zeitreihen von Messwerten als Heizvorgang identifiziert, bei denen die Raumisttemperatur anfangs um mindestens ein halbes Grad kleiner als die Raumsolltemperatur ist.

Hierdurch kann vermieden werden, dass zufällige zeitliche Schwankungen der Raumtemperatur als Heizvorgang identifiziert werden.

Ein weiteres Kriterium zum Auswählen eines Heizvorgangs kann lauten, dass sich die Raumisttemperatur innerhalb eines zweiten vorgegebenen Zeitraums um höchstens 0,1 K verringert. Hierdurch kann erreicht werden, dass nur solche Zeitreihen von Messwerten als Heizvorgänge erkannt werden, bei denen die Raumisttemperatur im Wesentlichen monoton ansteigt. Als zweiter vorgegebener Zeitraum kann eine Dauer von mehreren Minuten, beispielsweise fünf bis zehn Minuten festgelegt werden.

Die beim Ermitteln der Vielzahl von Parametern verwendeten Heizvorgänge können in mindestens zwei zeitlich kürzere Heizvorgänge aufgeteilt werden, die jeweils mindestens eine Dauer eines dritten vorgegebenen Zeitraums haben. Der dritte Zeitraum muss kürzer als der erste Zeitraum sein. Insbesondere beträgt der dritte Zeitraum die Hälfte, ein Drittel, ein Viertel oder ein Fünftel des ersten Zeitraums. Durch das Aufteilen kann die Anzahl an auszuwertender Heizvorgänge erhöht, also insbesondere verdoppelt, verdreifacht, vervierfacht oder verfünffacht werden. Dieser Vorgang wird auch als "Subsampling" bezeichnet. Das Erhöhen der Anzahl von auswertbaren Heizvorgängen kann die Genauigkeit der Auswertung verbessern, insbesondere wenn eine statistische Auswertung der Messwerte durchgeführt wird.

Das Ermitteln der Vielzahl von Parametern kann vorzugsweise unter Verwendung eines linearen Regressionsmodells durchgeführt werden. Hierbei kann ein Prozess des Maschinenlernens implementiert werden, um ein Modell des zu beheizenden Raums zu erstellen, beziehungsweise ein Modell an die Eigenschaften des zu beheizenden Raumes anzupassen. Da die in einem Raum auftretenden Wärmeverluste und eventuell auftretenden Fremdwärmeeinträge (zum Beispiel durch Sonnenstrahlung, die den Raum durch ein Fenster erwärmt) nicht ohne weiteres berechnet und in einem Modell berücksichtigt werden können, wird ein vorhandenes Modell an tatsächliche Messwerte angepasst. Die Abweichung zwischen den gemessenen Daten und den durch das Modell erzeugte Daten soll möglichst klein sein. Ein hierbei verwendetes Modell weist eine Vielzahl von Modellparametern auf, die über eine lineare Regression optimiert werden können.

Die erfindungsgemäße Aufgabe wird außerdem durch eine Heizungsanlage gelöst, die konfiguriert ist, das erfindungsgemäße Verfahren durchzuführen. Die Heizungsanlage ist in einem Gebäude mit mindestens einem beheizbaren Raum, der mindestens einen Heizkörper aufweist, angeordnet. Die Heizungsanlage umfasst eine Regeleinrichtung zum Regeln der Temperatur in dem mindestens einen beheizbaren Raum auf eine vorgegebene Raumsolltemperatur sowie eine Messeinrichtung zur Bestimmung der Raumtemperatur. Die Heizungsanlage umfasst ferner einen Wärmeerzeuger zum Erhitzen eines Trägermediums, das über einen Vorlauf zum mindestens einen Heizkörper fließt und über einen Rücklauf zurück zum Wärmeerzeuger fließt. Im Vorlauf sind Mittel zum Erfassen einer aktuellen Vorlauftemperatur angeordnet. Außerdem weist die Heizungsanlage Mittel zum Erfassen einer aktuellen Raumisttemperatur des mindestens einen beheizbaren Raums, Mittel zum Vorgeben der Raumsolltemperatur für den mindestens einen beheizbaren Raum, Mittel zum Erfassen einer Außentemperatur und Mittel zum Vorgeben einer Zieltemperatur, die in dem mindestens einen beheizbaren Raum zu einem ersten Zeitpunkt erreicht werden soll, auf. Die Heizungsanlage ist konfiguriert, die Temperaturmesswerte zu vorgegebenen Zeitpunkten periodisch zu erzeugen und aufzuzeichnen und einen zweiten Zeitpunkt zu ermitteln, zu dem ein Aufheizvorgang starten muss, um im ersten Zeitpunkt die Zieltemperatur zu erreichen. Das Ermitteln des zweiten Zeitpunkts erfolgt in Abhängigkeit einer Vielzahl von Parametern.

Erfindungsgemäß ist die Heizungsanlage konfiguriert, die Vielzahl von Parametern in Abhängigkeit einer Vielzahl aufgezeichneter Messwerte zu ermitteln, wobei nur solche Messwerte aus einem festgelegten Zeitraum verwendet werden, die während eines Heizvorgangs erzeugt wurden, wobei die Messwerte jener Zeitpunkte zu einem Heizvorgang gehören, zu denen die aktuelle Raumisttemperatur kleiner ist als die aktuell vorgegebene Raumsolltemperatur.

Kurzbeschreibung der Figuren

Weitere vorteilhafte Ausgestaltungen werden nachfolgend anhand eines in den Zeichnungen dargestellten Ausführungsbeispiels, auf welches die Erfindung jedoch nicht beschränkt ist, näher beschrieben.

Es zeigen schematisch:

| Figur 1 Fig. 1 | zeigt eine erfindungsgemäße Heizungsanlage gemäß einem ersten Ausführungsbeispiel. |
| Figur 2 Fig. 2 | zeigt ein Ablaufdiagramm eines beispielshaften erfindungsgemäßen Verfahrens. |
| Figur 3 Fig. 3 | illustriert das Erkennen von Heizvorgängen. |
| Figur 4 Fig. 4 | illustriert den Verlauf einer Raumtemperatur mit und ohne Berücksichtigung der Aufheizzeit. |

**Ausführliche Beschreibung der Erfindung anhand von Ausführungsbeispielen**

Bei der nachfolgenden Beschreibung einer bevorzugten Ausführungsform der vorliegenden Erfindung bezeichnen gleiche Bezugszeichen gleiche oder vergleichbare Komponenten.

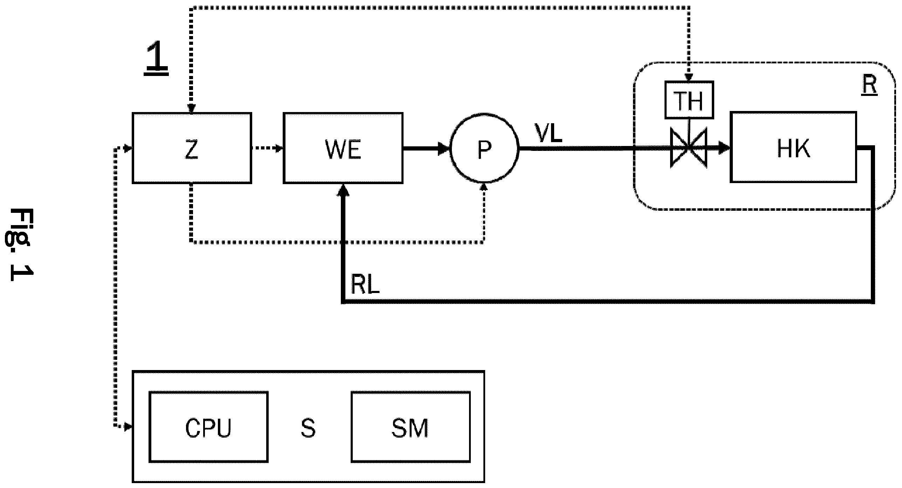

Fig. 1 zeigt ein Ausführungsbeispiel einer erfindungsgemäßen Heizungsanlage 1 für ein Gebäude mit mindestens einem beheizbaren Raum R, der mindestens einen Heizkörper HK aufweist. Das Gebäude kann weitere beheizbare und/oder nicht beheizbare Räume umfassen.

Die Heizungsanlage 1 weist einen Wärmeerzeuger WE auf, bei dem es sich beispielsweise um einen mit Gas, Heizöl, Holz oder sonstigem Brennstoff betriebenen Warmwasserkessel handeln kann. Über einen Vorlauf VL fließt ein vom Wärmeerzeuger WE erhitztes fluides Wärmeträgermedium, beispielsweise Wasser, zum Heizkörper HK im Raum R. Über einen Rücklauf RL fließt das Wärmeträgermedium vom Heizkörper HK zurück zum Wärmeerzeuger WE. Zum Fördern des Wärmeträgermediums ist beispielsweise im Vorlauf VL eine Pumpe P angeordnet. Die Pumpe P kann anstatt im Vorlauf VL auch im Rücklauf RL oder im Wärmeerzeuger WE selbst angeordnet sein. Die Förderleistung der Pumpe P kann beispielsweise über die Pumpendrehzahl steuerbar beziehungsweise regelbar sein. Über einen nicht dargestellten Temperatursensor wird eine Vorlauftemperatur $T_{VL}$ des Wärmeträgermediums im Vorlauf VL gemessen. Die Heizungsanlage 1 kann ferner einen Außentemperatursensor zum Erfassen einer Außentemperatur $T_A$ aufweisen.

Im Raum R ist ein Raumthermostat TH zum Regeln der Raumtemperatur angeordnet. Der Raumthermostat TH weist einen Raumtemperatursensor zum Erfassen der Raumisttemperatur $T_R$ und einen Raumtemperaturregler zum Regeln der Raumtemperatur auf eine vorgegebene Raumsolltemperatur $T_{R,W}$ auf. Beispielsweise kann der Raumtemperaturregler einen Aktor steuern, der den Öffnungsgrad eines Ventils des Heizkörpers HK als Stellglied zum Einstellen eines Massenstroms beziehungsweise eines Volumenstroms des Wärmeträgermediums durch den Heizkörper HK bestimmt.

Die Heizungsanlage 1 weist ferner eine zentrale Steuer- oder Regeleinrichtung Z zum Steuern und/oder Regeln des Wärmeerzeugers WE auf. Die zentrale Steuer- oder Regeleinrichtung Z kann ferner zum Steuern und/oder Regeln der Pumpe konfiguriert sein. Über drahtgebundene oder drahtlose Kommunikationsleitungen kann die Steuer- oder Regeleinrichtung Z Sollwertvorgaben an den Raumthermostaten TH übertragen.

In der beispielhaften Darstellung der Fig. 1 weist die Heizungsanlage 1 nur einen Heizkörper HK zum Beheizen von nur einem beheizbaren Raum R auf. Eine erfindungsgemäße Heizungsanlage 1 kann aber auch zum Heizen einer Vielzahl von beheizbaren Räumen ausgelegt sein. Die Raumtemperaturregelung kann beispielsweise auf eine von zwei verschiedenen gängigen Arten erfolgen. Bei einer Einzelraumregelung kann für jeden Raum separat eine eigene Raumsolltemperatur vorgegeben werden. In diesem Fall weist jeder Raum einen eigenen Raumthermostaten zum Regeln der Raumtemperatur auf den Sollwert auf. Das erfindungsgemäße Verfahren, für das im Folgenden noch ein Ausführungsbeispiel beschrieben wird, kann dann für jeden Raum separat ausgeführt werden. Alternativ kann ein Raum als Referenzraum dienen. In diesem Fall wird das Verfahren nur für diesen einen Raum durchgeführt.

Die Heizungsanlage 1 ist über eine Kommunikationsschnittstelle und eine geeignete Kommunikationsleitung mit einem geographisch entfernten Server S verbunden. Beispielsweise kann die Steuer- oder Regeleinrichtung Z über ein Gateway mit dem Internet verbunden sein. Der Server S kann mindestens einen Prozessor CPU und mindestens ein Speichermedium SM aufweisen.

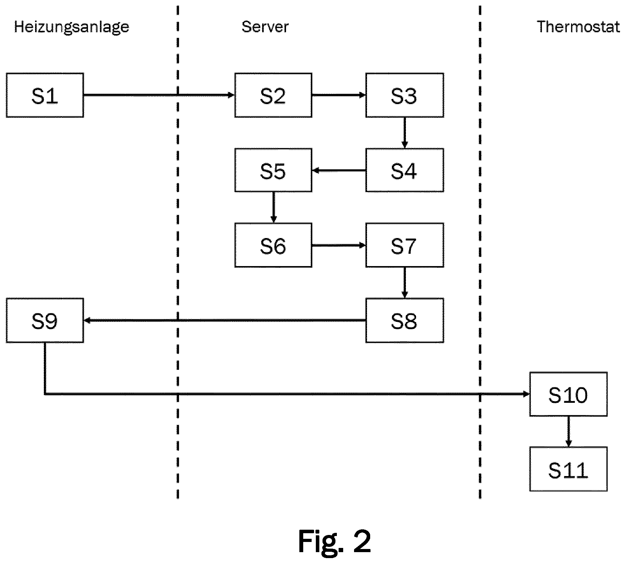

Fig. 2 zeigt ein Ablaufdiagramm einer beispielhaften Ausführung des erfindungsgemäßen Verfahrens. Im ersten Schritt S1 zeichnet die Heizungsanlage 1 Messwerte auf. Das Aufzeichnen der Messwerte erfolgt periodisch zu festgelegten Zeitpunkten, beispielsweise mit einer Frequenz von mindestens einem Mal pro fünf Minuten bis zu mindestens einem Mal pro Sekunde. Die Messwerte umfassen mindestens die aktuelle Raumisttemperatur $T_R$ des mindestens einen beheizbaren Raums R und die aktuell für den mindestens einen beheizbaren Raum R vorgegebene Raumsolltemperatur $T_{R,W}$ zusammen mit dem Zeitpunkt der Messung. Als weitere Messwerte können zum Beispiel die aktuelle Außentemperatur $T_A$ und die aktuelle Vorlauftemperatur $T_{VL}$ aufgezeichnet werden. Die Messwerte können beispielsweise zunächst in einem Pufferspeicher in der zentralen Regel- oder Steuereinrichtung Z zwischengespeichert und dann an den Server S übertragen werden. Die Übertragung der Messwerte an den Server S kann beispielsweise zu festgelegten Zeitpunkten mindestens einmal am Tag oder mehrmals am Tag durchgeführt werden. Die Messwerte werden insbesondere als Zeitreihe von Messwerten an den Server S zu übertragen. Die Übertragung der Messwerte an den Server S kann auch immer dann erfolgen, wenn eine bestimmte Anzahl von aufgezeichneten Messwerten im Pufferspeicher der zentralen Steuer- oder Regeleinrichtung Z vorliegt. Alternativ ist auch eine Übertragung der Messwerte in Echtzeit möglich, so dass die Messwerte sofort beziehungsweise so schnell wie möglich an den Server S übertragen werden. Die übertragenen Messwerte können auch erst im Server S zu einer Zeitreihe formatiert werden. Hierzu können die Messwerte jeweils einen Zeitstempel aufweisen, anhand dessen der Zeitpunkt der Erzeugung des jeweiligen Messwerts identifiziert werden kann.

Im zweiten Schritt S2 empfängt der Server S die übertragenen Messwerte und speichert sie im Schritt S3 lokal im Speichermedium SM ab. Im Schritt S3 des Abspeicherns der Messwerte kann der Server S auch eine Konvertierung der Messwerte oder ein Sortieren der Messwerte nach Zeitpunkten durchführen. Die folgenden Schritte S3 bis S8 werden alle vom Server S durchgeführt.

Je nach Häufigkeit der Übertragung der Messwerte kann der Server in einem weiteren Schritt S4 die Messwerte zu Paketen von Zeitreihen zu je 24 Stunden zusammenfassen. Hierdurch kann eine nach Tagen sortierte Datenbank von Messwerten angelegt werden, so dass eine nachträgliche Auswertung der Messwerte erleichtert wird. So kann zum Beispiel zum Erzeugen und Testen von Modellparametern gezielt auf gespeicherte Datensätze zugegriffen werden.

Im Schritt S5 wird zunächst eine Identifizierung von Heizvorgängen durchgeführt. Hierbei können insbesondere alle zuletzt übertragenen Messwerte ausgewertet werden. Alternativ kann ein Zeitraum $\Delta t_H$ festgelegt werden, aus dem die gespeicherten Messwerte ausgewertet werden sollen. Der Zeitraum $\Delta t_H$ kann beispielsweise einen bis mehrere Tage umfassen. Der zu analysierende Zeitraum $\Delta t_H$ muss nicht zusammenhängend sein. Beispielsweise können mehrere Tage mit ähnlichen Verläufen der Außentemperatur ausgewählt werden. Um eine möglichst große Anzahl von Messwerten auszuwerten, können auch alle gespeicherten Messwerte analysiert werden.

Die Heizvorgänge werden identifiziert, indem eine oder mehrere Bedingungen geprüft werden. Eine erste Bedingung für das Vorliegen eines Heizvorgangs lautet, dass die aufgezeichnete Raumisttemperatur eines Zeitpunkts kleiner als die vorgegebene Raumsolltemperatur des Zeitpunkts ist. Das Ende eines Heizvorgangs wird durch den Zeitpunkt markiert, in dem die Raumisttemperatur mindestens gleich der Raumsolltemperatur ist. Zusätzlich kann hierbei eine Hysterese berücksichtigt werden. Da diese jedoch lediglich einen Offset verursacht, wird im Folgenden vereinfachend davon ausgegangen, dass keine Hysterese zu berücksichtigen ist.

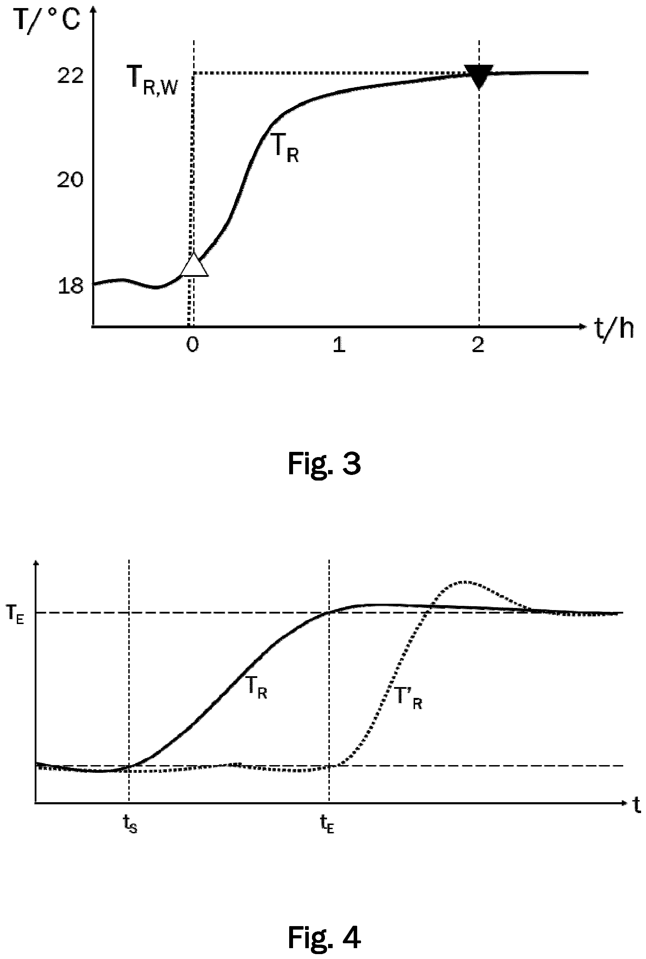

Der Vorgang des Erkennens eines Heizvorgangs wird im Folgenden nochmals anhand des in Fig. 3 illustrierten Beispiels eines Temperaturverlaufs beschrieben. In Fig. 3 ist eine Zeitreihe von Messwerten der Raumisttemperatur $T_R$ als Kurve über die Zeit aufgetragen dargestellt. Zum Beginn des dargestellten Verlaufs schwankt die Raumisttemperatur $T_R$ um einen Wert von ungefähr 18°C. Im Zeitpunkt 0 wird die Raumsolltemperatur $T_{R,W}$ auf einen Wert von 22°C eingestellt, so dass ab diesem Zeitpunkt die Raumisttemperatur $T_R$ zunächst kleiner als die Raumsolltemperatur $T_{R,W}$ ist. Der Zeitpunkt 0 markiert somit den Beginn eines Heizvorgangs, der in Fig. 3 als weißes Dreieck gekennzeichnet ist.

Nach ungefähr zwei Stunden erreicht die Raumisttemperatur $T_R$ den vorgegebenen Wert der Raumsolltemperatur $T_{R,W}$ von 22°C. Dieser Zeitpunkt markiert das Ende des Heizvorgangs und ist in Fig. 3 durch ein schwarzes Dreieck gekennzeichnet. Alle Punkte der dargestellten Raumisttemperaturkurve zwischen dem weißen und dem schwarzen Dreieck gehören nun zu dem identifizierten Heizvorgang und können in der folgenden weiteren Datenauswertung verwendet werden.

Auf die oben beschriebene Weise kann aus der Vielzahl von Messwerten eine Vielzahl von Heizvorgängen identifiziert werden. Für die Berechnung von Parametern für das Ermitteln einer Aufheizzeit kann es sinnvoll sein, weitere Bedingungen an die Heizvorgänge zu stellen. Gemäß einer ersten zusätzlichen Bedingung an einen Heizvorgang kann vorgegeben werden, dass der Heizvorgang länger als ein erster vorgegebener Zeitraum $\Delta t_1$ sein soll. Dieser erste vorgegebene Zeitraum $\Delta t_1$ kann beispielsweise mindestens fünf Minuten bis dreißig Minuten, vorzugsweise zehn, fünfzehn oder zwanzig Minuten betragen.

Gemäß einer zweiten zusätzlichen Bedingung an einen Heizvorgang kann vorgegeben werden, dass die Differenz zwischen aktueller Raumsolltemperatur $T_{R,W}$ und aktueller Raumisttemperatur $T_R$ zum Beginn des Heizvorgangs mindestens 0,5 K bis mindestens 1 K beträgt. Hiermit kann vermieden werden, dass zufällige Schwankungen der Raumtemperatur als Heizvorgang identifiziert werden.

Gemäß einer dritten zusätzlichen Bedingung an einen Heizvorgang kann vorgegeben werden, dass sich die Raumisttemperatur $T_R$ während des Heizvorgangs um höchstens 0,1 K innerhalb eines zweiten vorgegebenen Zeitraums $\Delta t_2$ verringert. Der zweite vorgegebene Zeitraum $\Delta t_2$ kann wenige Minuten, beispielsweise fünf Minuten betragen. Dieser vorgegebene maximale Temperaturabfall sorgt dafür, dass die Heizvorgänge einen im Wesentlichen monotonen Anstieg der Temperatur aufweisen, was bei der späteren Datenauswertung vorteilhaft ist.

Die drei oben beschriebenen zusätzlichen Bedingungen können jeweils einzeln oder in beliebiger Kombination verwendet werden, um für die Datenauswertung geeignete Heizvorgänge zu identifizieren.

Anschließend kann im Schritt S6 eine Aufteilung der Heizvorgänge vorgenommen werden, um die Anzahl der auswertbaren Heizvorgänge weiter zu erhöhen. Dieser Schritt S6 wird auch als Subsampling bezeichnet. Eine hohe Anzahl von Heizvorgängen ist insbesondere bei einer statistischen Auswertung vorteilhaft. Das Aufteilen der Heizvorgänge erfolgt insbesondere durch ein zeitliches Unterteilen der zuvor erkannten Heizvorgänge in kürzere Heizvorgänge, die jeweils eine Dauer eines dritten vorgegebenen Zeitraums $\Delta t_3$ haben. Das zeitliche Unterteilen kann beispielsweise in festen Zeitschritten von einigen Minuten vorgenommen werden. Alternativ kann das Aufteilen der Heizvorgänge auch anhand von festgelegten Temperaturunterschieden durchgeführt werden, beispielsweise in Schritten von 0,5 K bis 1 K.

Die Vielzahl von Parametern wird in Schritt S7 ermittelt. Die Vielzahl von Parametern kann insbesondere durch Trainieren eines heizungsanlagenspezifischen Modells, vorzugsweise eines Modells der linearen Regression, unter Verwendung der zuvor in S6 identifizierten Aufheizvorgänge ermittelt werden. Trainieren des Modells bedeutet in diesem Kontext, dass die Vielzahl von Parametern als Koeffizienten eines mathematischen Modells ermittelt werden kann. Hierbei werden die zuvor identifizierten Aufheizvorgänge mit berechneten Werten des Modells verglichen und die Abweichung zwischen den berechneten Werten und den Messwerten minimiert, indem die Koeffizienten variiert werden. Als mathematisches Modell für die Aufheizzeit $t_A$ kann beispielsweise die folgende Formel mit vier Parametern $\beta_1$, $\beta_2$, $\beta_3$, $\beta_4$ als Koeffizienten verwendet werden:

$$t_A = \beta_1 \cdot T_S + \beta_2 \cdot T_E + \beta_3 \cdot T_{VL} + \beta_4 \cdot T_A$$

Hierbei ist $T_S$ die Starttemperatur eines Aufheizvorgangs, $T_E$ die Endtemperatur eines Aufheizvorgangs, $T_{VL}$ die Vorlauftemperatur während des Aufheizvorgangs und $T_A$ die Außentemperatur während des Aufheizvorgangs. Die Parameter $\beta_1$,$\beta_2$,$\beta_3$,$\beta_4$ können aus dem Modell extrahiert und für eine weitere Verwendung im Speichermedium SM des Servers abgespeichert werden.

Im folgenden Schritt S8 werden die ermittelten Parameter an die Heizungsanlage 1 übertragen. Die Heizungsanlage 1 empfängt in Schritt S9 die ermittelten Parameter. Die zentrale Regel- oder Steuereinheit Z der Heizungsanlage 1 kann anhand der ermittelten Parameter die Aufheizzeit des mindestens einen beheizbaren Raumes R berechnen, so dass bei Vorgabe einer Raumsolltemperatur $T_E$ für einen bestimmten Zeitpunkt $t_E$ in der Zukunft, ein optimaler Zeitpunkt $t_S$ zum Starten des Aufheizvorgangs ermittelt werden kann. Alternativ kann das Ermitteln der Aufheizzeit auch von einem Raumthermostaten TH durchgeführt werden. Hierzu kann die zentrale Regel- oder Steuereinheit Z die Vielzahl von Parametern in Schritt S10 an mindestens einen intelligenten Raumthermostaten TH weitergeben. Wenn die zentrale Regel- oder Steuereinheit Z die Aufheizzeiten ermittelt, so gibt sie diese in Schritt S10 an den Raumthermostaten TH weiter. Der Raumthermostat TH verwendet die ermittelten Aufheizzeiten in Schritt S11.

In Fig. 4 sind beispielhaft zwei zeitliche Verläufe der Raumtemperatur dargestellt. Die gestrichelte Kurve $T'_R$ illustriert den zeitlichen Verlauf der Raumtemperatur ohne Ermitteln der Aufheizzeit. Zum Zeitpunkt $t_E$ wird die Raumsolltemperatur $T_E$ vorgegeben. In diesem Moment beginnt der Aufheizvorgang. Die durchgezogene Kurve $T_R$ illustriert den zeitlichen Verlauf der Raumtemperatur mit Ermitteln der Aufheizzeit. Um im Zeitpunkt $t_E$ die Raumsolltemperatur $T_E$ zu erreichen, wird der Aufheizvorgang schon im Zeitpunkt $t_S$ gestartet.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

**Bezugszeichenliste**

| | |
|---|---|
| **1** | Heizungsanlage |
| **R** | beheizbarer Raum |
| **WE** | Wärmeerzeuger |
| **VL** | Vorlauf |
| **RL** | Rücklauf |

| | |
|---|---|
| **HK** | Heizkörper |
| **P** | Pumpe |
| **Z** | zentrale Regeleinrichtung |
| **TH** | Raumthermostat |
| **S** | Server |
| **SM** | Speichermedium |
| **CPU** | Prozessor |

**Patentansprüche**

1.  Verfahren zum Betreiben einer Heizungsanlage (1) in einem Gebäude mit mindestens einem beheizbaren Raum (R), wobei das Verfahren folgende Schritte umfasst:

    zu vorgegebenen Zeitpunkten werden periodisch mindestens die folgenden Messwerte erzeugt und aufgezeichnet:

    - eine aktuelle Raumisttemperatur ($T_R$) des mindestens einen beheizbaren Raums (R);
    - eine aktuelle Raumsolltemperatur ($T_{R,W}$) des mindestens einen beheizbaren Raums (R); und
    - eine Außentemperatur ($T_A$);

    Vorgeben einer Zieltemperatur ($T_E$), die in dem mindestens einen beheizbaren Raum (R) zu einem ersten Zeitpunkt ($t_E$) erreicht werden soll;
    Ermitteln eines zweiten Zeitpunkts ($t_S$), zu dem ein Aufheizvorgang starten muss, um im ersten Zeitpunkt ($t_E$) die Zieltemperatur ($T_E$) zu erreichen, wobei das Ermitteln des zweiten Zeitpunkts ($t_E$) in Abhängigkeit einer Vielzahl von Parametern erfolgt,
    **dadurch gekennzeichnet, dass**
    zu den vorgegebenen Zeitpunkten periodisch ferner ein Messwert einer aktuellen Vorlauftemperatur ($T_{VL}$) erzeugt und aufgezeichnet wird, und
    die Vielzahl von Parametern in Abhängigkeit der aufgezeichneten Messwerte ermittelt wird, wobei nur diejenigen Messwerte aus einem festgelegten Zeitraum ($\Delta t_H$) verwendet werden, die während eines Heizvorgangs erzeugt wurden, wobei Messwerte eines Zeitpunkts dann zu einem Heizvorgang gehören, falls die aktuelle Raumisttemperatur ($T_R$) kleiner als die aktuelle vorgegebene Raumsolltemperatur ($T_{R,W}$) ist.

2.  Verfahren nach Anspruch 1, wobei die Messwerte an einen geographisch entfernten Server übertragen werden und der Schritt des Ermittelns der Vielzahl von Parametern vom Server ausgeführt wird.

3.  Verfahren nach Anspruch 1 oder 2, wobei beim Ermitteln der Vielzahl von Parametern nur solche Heizvorgänge berücksichtigt werden, die mindestens eine der folgenden Bedingungen erfüllen:

- der Heizvorgang ist länger als ein erster vorgegebener Zeitraum ($\Delta t_1$);
- zum Beginn des Heizvorgangs beträgt die Differenz zwischen aktueller Raumsolltemperatur ($T_{R,W}$) und aktueller Raumisttemperatur ($T_R$) mindestens 0,5 K;
- während des Heizvorgangs verringert sich die Raumisttemperatur ($T_R$) innerhalb eines zweiten vorgegebenen Zeitraums ($\Delta t_2$) um höchstens 0,1 K.

4. Verfahren nach mindestens einem der vorhergehenden Ansprüche, wobei die beim Ermitteln der Vielzahl von Parametern verwendeten Heizvorgänge in mindestens zwei zeitlich kürzere Heizvorgänge aufgeteilt werden, die jeweils mindestens eine Dauer eines dritten vorgegebenen Zeitraums ($\Delta t_3$) haben.

5. Verfahren nach mindestens einem der vorhergehenden Ansprüche, wobei das Ermitteln der Vielzahl von Parametern unter Verwendung eines linearen Regressionsmodells durchgeführt wird.

6. Heizungsanlage (1) in einem Gebäude mit mindestens einem beheizbaren Raum (R) mit mindestens einem Heizkörper (HK), wobei die Heizungsanlage (1) mindestens umfasst:

- einen Thermostaten (TH) zum Regeln der Temperatur in dem mindestens einen beheizbaren Raum (R) auf eine vorgegebene Raumsolltemperatur ($T_{R,W}$);
- einen Wärmeerzeuger (WE) zum Erhitzen eines Trägermediums, das über
- einen Vorlauf (VL) zu
- dem mindestens einen Heizkörper (HK) fließt und über
- einen Rücklauf (RL) zurück zum Wärmeerzeuger (WE) fließt;
- Mittel zum Erfassen einer aktuellen Raumisttemperatur ($T_R$) des mindestens einen beheizbaren Raums (R);
- Mittel zum Vorgeben der Raumsolltemperatur ($T_{R,W}$) für den mindestens einen beheizbaren Raum (R);
- Mittel zum Erfassen einer Außentemperatur ($T_A$); und
- Mittel zum Vorgeben einer Zieltemperatur ($T_E$), die in dem mindestens einen beheizbaren Raum (R) zu einem ersten Zeitpunkt ($t_E$) erreicht werden soll,

wobei die Heizungsanlage (1) konfiguriert ist:

- die Temperaturmesswerte ($T_R$, $T_{R,W}$, $T_A$) zu vorgegebenen Zeitpunkten periodisch zu erzeugen und aufzuzeichnen; und
- einen zweiten Zeitpunkt ($t_S$) zu ermitteln, zu dem ein Aufheizvorgang starten muss, um im ersten Zeitpunkt ($t_E$) die Zieltemperatur ($T_E$) zu erreichen, wobei das Ermitteln des zweiten Zeitpunkts ($t_S$) in Abhängigkeit einer Vielzahl von Parametern erfolgt,

**dadurch gekennzeichnet, dass** im Vorlauf (VL) Mittel zum Erfassen einer aktuellen Vorlauftemperatur ($T_{VL}$) angeordnet sind, wobei die Heizungsanlage (1) konfiguriert ist, den Messwert der Vorlauftemperatur ($T_{VL}$) zu den vorgegebenen Zeitpunkten periodisch zu erzeugen und aufzuzeichnen; und die Heizungsanlage (1) konfiguriert ist, die Vielzahl von Parametern in Abhängigkeit der aufgezeichneten Messwerte zu ermitteln, wobei nur diejenigen Messwerte aus einem festgelegten Zeitraum ($\Delta t_H$) verwendet werden, die während eines Heizvorgangs erzeugt wurden, wobei Messwerte eines Zeitpunkts dann zu einem Heizvorgang gehören, falls die aktuelle Raumisttemperatur ($T_R$) kleiner als die aktuelle vorgegebene Raumsolltemperatur ($T_{R,W}$) ist.

7. Heizungsanlage (1) nach Anspruch 6, wobei die Heizungsanlage (1) Mittel zum Übertragen der Messwerte an einen geographisch entfernten Server (S) aufweist, und der Server (S) einen Prozessor (CPU) aufweist, der konfiguriert ist, die Vielzahl von Parametern zu ermitteln.

8. Heizungsanlage (1) nach Anspruch 6 oder 7, wobei der Prozessor (CPU) des Servers (S) konfiguriert ist, beim Ermitteln der Vielzahl von Parametern nur solche Heizvorgänge au berücksichtigen, die mindestens eine der folgenden Bedingungen erfüllen:

- der Heizvorgang ist länger als ein erster vorgegebener Zeitraum ($\Delta t_1$);
- zum Beginn des Heizvorgangs beträgt die Differenz zwischen aktueller Raumsolltemperatur ($T_{R,W}$) und aktueller Raumisttemperatur ($T_R$) mindestens 0,5 K;
- während des Heizvorgangs verringert sich die Raumisttemperatur ($T_R$) innerhalb eines zweiten vorgegebenen Zeitraums ($\Delta t_2$) um höchstens 0,1 K.

9. Heizungsanlage (1) nach mindestens einem der Ansprüche 6 bis 8, wobei der Prozessor (CPU) des Servers (S) konfiguriert ist, die beim Ermitteln der Vielzahl von Parametern verwendeten Heizvorgänge in mindestens zwei zeitlich kürzere Heizvorgänge aufzuteilen, die jeweils mindestens eine Dauer eines dritten vorgegebenen Zeitraums ($\Delta t_3$) haben.

10. Heizungsanlage (1) nach mindestens einem der Ansprüche 6 bis 9, wobei der Prozessor (CPU) des Servers (S) konfiguriert ist, die Vielzahl von Parametern unter Verwendung eines linearen Regressionsmodells zu ermitteln.

## Claims

1. A method for operating a heating system (1) in a building with at least one heatable room (R), said method comprising the steps of:

    at least the following measurement values are periodically generated and recorded at specified times:

    - a current actual room temperature ($T_R$) of said at least one heatable room (R);
    - a current target room temperature ($T_{R,W}$) of said at least one heatable room (R); and
    - an outside temperature ($T_A$);

    specifying a target temperature ($T_E$) to be reached in said at least one heatable room (R) at a first time ($t_E$);
    determining a second time (ts) at which a heating process must start in order to reach the target temperature ($T_E$) at the first time ($t_E$), wherein determining the second time (ts) is performed as a function of a plurality of parameters, **characterized in that**
    at said specified times, further a measurement value of a current flow temperature ($T_{VL}$) is generated and recorded;
    the plurality of parameters is determined as a function of the recorded measurement values, wherein only those measurement values from a specified period of time ($\Delta t_H$) are used that were generated during a heating process, wherein measurement values from a time belong to a heating process if the current actual room temperature ($T_R$) is lower than the current specified target room temperature ($T_{R,W}$).

2. The method according to claim 1, wherein the measurement values are transmitted to a geographically remote server and the step of determining the plurality of parameters is carried out by said server.

3. The method according to claim 1 or 2, wherein, when determining the plurality of parameters, only those heating processes are taken into account that meet at least one of the following conditions:

    - the heating process is longer than a first specified period of time ($\Delta t_1$);
    - at the start of the heating process, the difference between the current target room temperature ($T_{R,W}$) and the current actual room temperature ($T_R$) is at least 0.5 K;
    - during the heating process, the actual room temperature ($T_R$) is reduced by a maximum of 0.1 K within a second specified period of time ($\Delta t_2$).

4. The method according to at least one of the preceding claims, wherein the heating processes used in determining the plurality of parameters are divided into at least two shorter heating processes, each of which has at least a duration of a third specified period of time ($\Delta t_3$).

5. The method according to at least one of the preceding claims, wherein determining the plurality of parameters is performed using a linear regression model.

6. A heating system (1) in a building with at least one heatable room (R) with at least one radiator (HK), said heating system (1) comprising at least:

    - a thermostat (TH) for controlling the temperature in said at least one heatable room (R) to reach a specified target room temperature ($T_{R,W}$);
    - a heat generator (WE) for heating a carrier medium that flows via
    - a flow (VL) to
    - said at least one radiator (HK) and flows via
    - a return (RL) back to said heat generator (WE);
    - means for detecting a current actual room temperature ($T_R$) of said at least one heatable room (R);
    - means for specifying the target room temperature ($T_{R,W}$) for said at least one heatable room (R);
    - means for detecting an outside temperature ($T_A$); and
    - means for specifying a target temperature ($T_E$) to be reached in the at least one heatable room (R) at a first time ($t_E$),

wherein said heating system (1) is configured to:

    - periodically generate and record the temperature measurement values ($T_R$, $T_{R,W}$, $T_A$, $T_{VL}$) at specified times; and
    - determine a second time (ts) at which a heating process must start in order to reach the target temperature ($T_E$) at the first time ($t_E$), wherein determining the second time ($t_E$) is performed as a function of a plurality of parameters,

**characterized in that**
means for detecting a current flow temperature ($T_{VL}$) are arranged in the flow (VL), wherein said heating system (1) is configured to determine the measurement value of the flow temperature ($T_{VL}$) at the specified times; and

said heating system (1) is configured to determine the plurality of parameters as a function of the recorded measurement values, wherein only those measurement values from a specified period of time ($\Delta t_H$) are used that were generated during a heating process,

wherein measurement values from a time belong to a heating process if the current actual room temperature ($T_R$) is lower than the current specified target room temperature ($T_{R,W}$).

7. The heating system (1) according to claim 6, wherein said heating system (1) includes means for transmitting the measurement values to a geographically remote server (S), and said server (S) includes a processor (CPU) configured to determine the plurality of parameters.

8. The heating system (1) according to claim 6 or 7, wherein, when determining the plurality of parameters, said processor (CPU) of said server (S) is configured to take into account only those heating processes that meet at least one of the following conditions:

   - the heating process is longer than a first specified period of time ($\Delta t_1$);
   - at the start of the heating process, the difference between the current target room temperature ($T_{R,W}$) and the current actual room temperature ($T_R$) is at least 0.5 K;
   - during the heating process, the actual room temperature ($T_R$) is reduced by a maximum of 0.1 K within a second specified period of time ($\Delta t_2$).

9. The heating system (1) according to at least one of claims 6 to 8, wherein said processor (CPU) of said server (S) is configured to divide the heating processes used in determining the plurality of parameters into at least two shorter heating processes, each of which has at least a duration of a third specified period of time ($\Delta t_3$).

10. The heating system (1) according to at least one of Claims 6 to 9, wherein said processor (CPU) of said server (S) is configured to determine the plurality of parameters using a linear regression model.

## Revendications

1. Procédé pour faire fonctionner une installation de chauffage (1) dans un bâtiment avec au moins une pièce (R) pouvant être chauffée, dans lequel le procédé comprend les étapes suivantes :

   à des moments prédéfinis, au moins les valeurs de mesure suivantes sont générées et enregistrées périodiquement :

   - une température réelle de pièce ($T_R$) actuelle de la au moins une pièce (R) pouvant être chauffée ;
   - une température théorique de pièce ($T_{R,W}$) actuelle de la au moins une pièce (R) pouvant être chauffée ; et
   - une température extérieure ($T_A$);

   la prédéfinition d'une température cible ($T_E$), qui vise à être atteinte dans la au moins une pièce (R) pouvant être chauffée à un premier moment ($t_E$) ;
   la détermination d'un deuxième moment (ts), auquel un processus de chauffage doit démarrer, afin d'atteindre la température cible ($T_E$) dans le premier moment ($t_E$), dans lequel la détermination du deuxième moment (ts) s'effectue en fonction d'une pluralité de paramètres,
   **caractérisé en ce que**
   aux moments prédéfinis, une valeur de mesure d'une température aller ($T_{VL}$) est en outre générée et enregistrée périodiquement, et
   la pluralité de paramètres est déterminée en fonction des valeurs de mesure enregistrées, dans lequel seules les valeurs de mesure provenant d'une période définie ($\Delta t_H$) qui ont été générées pendant un processus de chauffage sont utilisées, dans lequel les valeurs de mesure d'un moment font alors partie d'un processus de chauffage, au cas où la température réelle de pièce ($T_R$) actuelle serait inférieure à la température théorique de pièce ($T_{R,W}$) actuelle prédéfinie.

2. Procédé selon la revendication 1, dans lequel les valeurs de mesure sont transmises à un serveur géographiquement distant et l'étape de détermination de la pluralité de paramètres est réalisée par le serveur.

3. Procédé selon la revendication 1 ou 2, dans lequel lors de la détermination de la pluralité de paramètres, seuls les processus de chauffage qui remplissent au moins une des conditions suivantes sont pris en compte :

   - le processus de chauffage est plus long qu'une première période ($\Delta t_1$) prédéfinie ;
   - au début du processus de chauffage, la différence entre la température théorique de pièce ($T_{R,W}$) actuelle et la température réelle de pièce ($T_R$) actuelle atteint au moins 0,5 K ;

- pendant le processus de chauffage, la température réelle de pièce ($T_R$) diminue pendant une deuxième période ($\Delta t_2$) prédéfinie de maximum 0,1 K.

4. Procédé selon au moins l'une des revendications précédentes, dans lequel les processus de chauffage utilisés lors de la détermination de la pluralité de paramètres sont divisés en au moins deux processus de chauffage temporellement plus courts, qui présentent respectivement au moins une durée d'une troisième période ($\Delta t_3$) prédéfinie.

5. Procédé selon au moins l'une des revendications précédentes, dans lequel la détermination de la pluralité de paramètres est exécutée au moyen d'un modèle de régression linéaire.

6. Installation de chauffage (1) dans un bâtiment avec au moins une pièce (R) pouvant être chauffée avec au moins un corps de chauffe (HK), dans laquelle l'installation de chauffage (1) comprend au moins :

   - un thermostat (TH) pour la régulation de la température dans la au moins une pièce (R) pouvant être chauffée à une température théorique de pièce ($T_{R,W}$) prédéfinie ;
   - un générateur de chaleur (WE) pour chauffer un agent porteur, qui s'écoule par l'intermédiaire
   - d'une canalisation aller (VL) vers
   - le au moins un corps de chauffe (HK) et s'écoule en retour par l'intermédiaire
   - d'une canalisation retour (RL) vers le générateur de chaleur (WE) ;
   - des moyens pour acquérir une température réelle de pièce ($T_R$) actuelle de la au moins une pièce (R) pouvant être chauffée ;
   - des moyens pour prédéfinir la température théorique de pièce ($T_{R,W}$) pour la au moins une pièce (R) pouvant être chauffée ;
   - des moyens pour acquérir une température extérieure ($T_A$) ; et
   - des moyens pour prédéfinir une température cible ($T_E$), qui vise à être atteinte dans la au moins une pièce (R) pouvant être chauffée à un premier moment ($t_E$) ;

   dans laquelle l'installation de chauffage (1) est configurée :

   - pour générer et pour enregistrer périodiquement les valeurs de mesure de température ($T_R$, $T_{R,W}$, $T_A$) à des moments prédéfinis ; et
   - pour déterminer un deuxième moment (ts) auquel un processus de chauffage doit démarrer afin d'atteindre la température cible ($T_E$) dans le premier moment ($t_E$), dans lequel la détermination du deuxième moment (ts) s'effectue en fonction d'une pluralité de paramètres,

**caractérisée en ce que**

des moyens pour acquérir une température aller ($T_{VL}$) actuelle sont disposés dans la canalisation aller (VL), dans laquelle l'installation de chauffage (1) est configurée pour générer et pour enregistrer périodiquement la valeur de mesure de la température aller ($T_{VL}$) aux moments prédéfinis ; et l'installation de chauffage (1) est configurée pour déterminer la pluralité de paramètres en fonction des valeurs de mesure enregistrées, dans laquelle seules les valeurs de mesure provenant d'une période ($\Delta t_H$) fixée qui ont été générées pendant un processus de chauffage sont utilisées, dans laquelle les valeurs de mesure d'un moment font alors partie d'un processus de chauffage, au cas où la température réelle de pièce ($T_R$) actuelle serait inférieure à la température théorique de pièce ($T_{R,W}$) prédéfinie actuelle.

7. Installation de chauffage (1) selon la revendication 6, dans laquelle l'installation de chauffage (1) présente des moyens pour transmettre les valeurs de mesure à un serveur (S) géographiquement distant, et le serveur (S) présente un processeur (CPU), qui est configuré pour déterminer la pluralité de paramètres.

8. Installation de chauffage (1) selon la revendication 6 ou 7, dans laquelle le processeur (CPU) du serveur (S) est configuré pour, lors de la détermination de la pluralité de paramètres, prendre en compte uniquement les processus de chauffage qui remplissent au moins l'une des conditions suivantes :

   - le processus de chauffage est plus long qu'une première période ($\Delta t_1$) prédéfinie ;
   - au début du processus de chauffage, la différence entre la température théorique de pièce ($T_{R,W}$) actuelle et la température réelle de pièce ($T_R$) actuelle atteint au moins 0,5 K ;
   - pendant le processus de chauffage, la température réelle de pièce ($T_R$) diminue pendant une deuxième période ($\Delta t_2$) prédéfinie de maximum 0,1 K.

9. Installation de chauffage (1) selon au moins l'une des revendications 6 à 8, dans laquelle le processeur (CPU) du serveur (S) est configuré pour diviser les processus de chauffage utilisés lors de la détermination de la pluralité de paramètres en au moins deux processus de chauffage temporellement plus courts, qui présentent respectivement au moins une durée d'une troisième période ($\Delta t_3$) prédéfinie.

10. Installation de chauffage (1) selon au moins l'une des revendications 6 à 9, dans laquelle le processeur (CPU) du serveur (S) est configuré pour déterminer la pluralité de paramètres au moyen d'un modèle de régression linéaire.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013058966 A1
- US 20100318227 A1
- EP 2369244 A1
- CN 105805822 A
- DE 102010056301 A1